# EUROPÄISCHE PATENTANMELDUNG

(11) **EP 3 954 185 A1**
(43) Veröffentlichungstag der Anmeldung: **16.02.2022**
(21) Anmeldenummer: 21000223.4
(22) Anmeldetag: 10.08.2021
(51) Int. Cl.: A01B 33/04, A01B 33/14, A01B 39/14

(54) **LANDWIRTSCHAFTLICHE FRÄSE**

(30) Priorität: 12.08.2020 DE 202020003456 U
(71) Anmelder: Hermeler, Thomas, 48336 Sassenberg-Füchtorf (DE)
(72) Erfinder: Hermeler, Thomas, 48336 Sassenberg-Füchtorf (DE)
(74) Vertreter: Witzany, Manfred

(57) **Zusammenfassung**

Eine landwirtschaftliche Fräse (1) dient zur Bearbeitung eines Dammes, insbesondere eines Spargeldammes. Die Fräse (1) weist hierzu mindestens einen um eine Antriebswelle (7) rotierenden Fräser (6) auf, der Bodenmaterial zum Damm aufwerfen kann. Der Fräser (6) ist mit mindestens einem Schlegel (9) ausgerüstet, der mit dem Fräser (6) rotiert und mindestens eine Prallfläche (22) zur Erfassung des Bodenmaterials besitzt. Um die Standzeit der Fräse (1) zu verbessern, ist die Prallfläche (22) spitzwinkelig zur Drehrichtung angestellt.

## Beschreibung

Die Erfindung betrifft eine landwirtschaftliche Fräse zur Bearbeitung eines Dammes, insbesondere eines Spargeldammes. Diese Fräse weist mindestens einen um eine Antriebswelle rotierenden Fräser auf, der Bodenmaterial zum Damm aufwerfen kann. Zu diesem Zweck weist er mindestens einen Schlegel auf, der mit dem mindestens einen Fräser rotiert und mindestens eine Prallfläche zur Erfassung des Bodenmaterials besitzt.

Aus der DE 20 2012 010 819 U ist eine gattungsgemäße Fräse bekannt. Diese weist ein Gehäuse auf, in dem zwei Fräser rotierbar abgestützt sind. Diese Fräser besitzen Antriebswellen, die mit einer Zapfwelle eines Zugfahrzeuges, insbesondere eines landwirtschaftlichen Traktors, in Verbindung stehen. Jeder der Fräser weist eine Anzahl von Schlegeln auf, die einen rechteckförmigen Querschnitt besitzen. Diese Schlegel besitzen Prallflächen, die senkrecht zur Drehrichtung der Fräser ausgerichtet sind. Auf diese Weise wird eine maximale Impulsübertragung auf das Bodenmaterial erreicht, um dieses effektiv zum Damm aufzuschütten. Diese Fräse hat sich in der Praxis vielfach bewährt und bildet den Ausgangspunkt der vorliegenden Erfindung.

Der Erfindung liegt die Aufgabe zugrunde, eine Fräse der eingangs genannten Art zu schaffen, die sich durch eine verbesserte Standzeit ihrer Komponenten auszeichnet.

Diese Aufgabe wird erfindungsgemäß mit den folgenden Merkmalen gelöst.

Die erfindungsgemäße landwirtschaftliche Fräse dient zum Bearbeiten eines Dammes und weist mindestens einen Fräser auf, an dem mindestens ein Schlegel vorgesehen ist, welcher mit dem mindestens einen Fräser rotiert und der in den Boden eintaucht. Dieser mindestens eine Schlegel weist mindestens eine Prallfläche auf, die aufgrund der Drehbewegung des mindestens einen Fräsers das Bodenmaterial löst und zum Damm aufwirft. Erfindungsgemäß wird diese Prallfläche spitzwinkelig zur Drehrichtung des mindestens einen Fräsers angestellt. Damit wird die Belastung des mindestens einen Schlegels durch das Bodenmaterial während der Drehbewegung des mindestens einen Fräsers reduziert. Diese Reduktion wird umso größer, je spitzwinkeliger die Prallfläche relativ zur Drehrichtung angestellt ist. Die Drehrichtung ist dabei als die Richtung des Geschwindigkeitsvektors des sich drehenden Fräsers definiert. Aufgrund der spitzwinkeligen Anordnung der Prallfläche erwartet man eine beträchtlich verringerte Fräswirkung der Fräse, da sich der Schlegel dann wie ein Messer oder ein Pflug durch den Boden schneidet, ohne wesentliche Teile des Bodenmaterials zum Damm aufzuwerfen. Es hat sich jedoch überraschend herausgestellt, dass insbesondere bei hohen Drehzahlen der Fräser dieser unerwünschte Effekt gering bleibt und insbesondere durch die verringerte Leistungsaufnahme der Fräse insgesamt mehr als kompensiert wird. Damit ergibt sich in überraschender Weise bei ähnlicher Leistungsaufnahme eine wesentlich höhere Fräsleistung oder bei gleicher Fräsleistung eine verringerte Leistungsaufnahme gegenüber bekannten landwirtschaftlichen Fräsen. Durch diese verringerte Leistungsaufnahme werden die Schlegel und mittelbar auch die Fräser entsprechend weniger stark belastet und besitzen daher eine beträchtlich erhöhte Standzeit, so dass sie erst nach einer deutlich längeren Fräsarbeit ausgewechselt werden müssen.

Für den Anstellwinkel der Prallfläche hat sich ein Winkel zwischen 10° und 80° bewährt. Außerhalb dieses Winkelbereichs nimmt der oben beschriebene Effekt für die Standfestigkeit des mindestens einen Schlegels rasch ab, so dass der damit verbundene Vorteil kaum noch spürbar ist.

Zur weiteren Verbesserung der Standfestigkeit hat sich ein Winkel zwischen 20° und 70° als günstig herausgestellt, da sich hierdurch die Standfestigkeit erheblich verbessert.

Bei einem Anstellwinkel der mindestens einen Prallfläche zwischen 25° und 65° ergibt sich eine optimale Standfestigkeit, wobei sich diese innerhalb dieses Winkelbereichs nur noch geringfügig ändert.

Zur exakten Einstellung des Anstellwinkels des mindestens einen Schlegels ist es vorteilhaft, wenn dieser mittels mindestens eines Keils mit dem mindestens einen Fräser verbunden ist. Damit kann der mindestens eine Schlegel geometrisch einfach aufgebaut sein, so dass er kostengünstig gewechselt werden kann. Dies ist wichtig, da der mindestens eine Schlegel trotz der verbesserten Standzeit immer noch ein Verschleißteil ist.

Es ist außerdem vorteilhaft, wenn mehrere der Keile zur Verfügung gestellt werden, die unterschiedliche Keilwinkel aufweisen. Auf diese Weise lässt sich der mindestens eine Schlegel problemlos in seiner Winkellage optimal an die vorhandenen Bodenverhältnisse anpassen.

Alternativ oder zusätzlich ist es vorteilhaft, wenn der mindestens eine Schlegel über seine Länge verdreht ist. Dabei nimmt der Anstellwinkel der mindestens einen Prallfläche in radialer Richtung nach außen zu. Dies führt zwar zu einer etwas komplexeren, torsionsartigen Schlegelform, diese Form trägt jedoch dem Umstand Rechnung, dass die Geschwindigkeit jedes Punktes des Schlegels von der Antriebswelle nach außen hin zunimmt. Außerdem ist der mindestens eine Schlegel antriebswellenseitig mit dem mindestens einen Fräser verbunden, so dass der radial überstehende Teil des mindestens einen Schlegels wie ein Kragarm wirkt. Beide Effekte führen dazu, dass der mindestens eine Schlegel an seinem von der Antriebswelle am weitesten entfernten Punkt am stärksten belastet ist. Deshalb ist es insbesondere dort wichtig, eine möglichst geringe Belastung des mindestens einen Schlegels zu erzielen, was durch die verdrehte Ausbildung des mindestens einen Schlegels realisiert ist. Im Gegensatz dazu ist der Anstellwinkel der mindestens einen Prallfläche nahe der Antriebswelle geringer, so dass auf diese Weise dem Umstand Rechnung getragen wird, dass die Geschwindigkeit des mindestens einen Schlegels in diesem Bereich reduziert ist, so dass es eher zu einer Schneidwirkung der mindestens einen Prallfläche kommt. Auf diese Weise ergibt sich eine optimale Nutzung des mindestens einen Schlegels über seine gesamte Länge.

Der Erfindungsgegenstand wird beispielhaft anhand der Zeichnung erläutert, ohne den Schutzumfang zu beschränken.

Es zeigt:
- Figur 1: eine räumliche Explosionsdarstellung einer landwirtschaftlichen Fräse und
- Figur 2: eine räumliche Darstellung eines Fräsers.

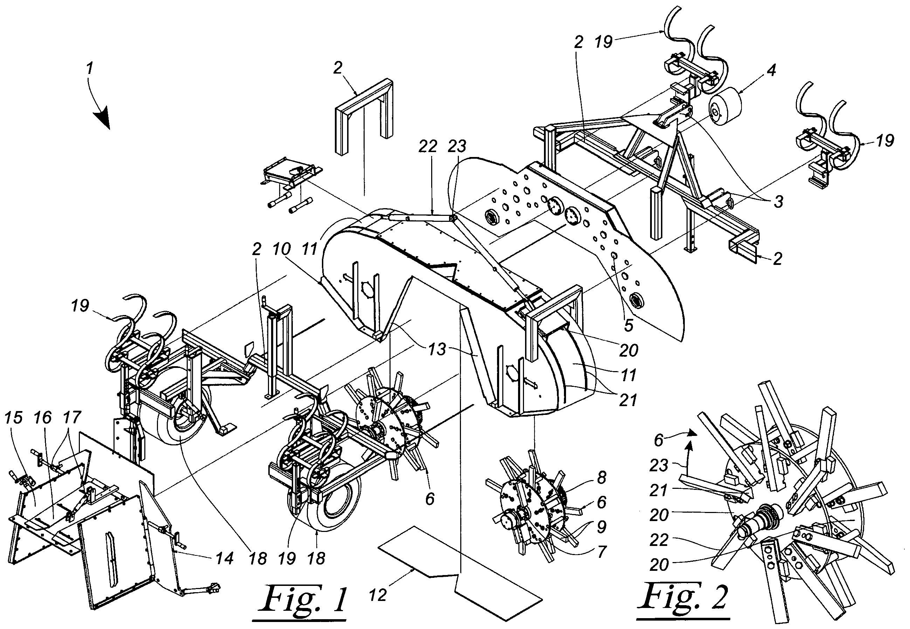

Die Figur 1 zeigt eine räumliche Explosionsdarstellung einer Fräse 1 für landwirtschaftliche Zwecke, nämlich zum Bearbeiten eines nicht dargestellten Dammes. Die Fräse 1 weist einen Rahmen 2 auf, der lediglich zur besseren Übersicht mehrteilig dargestellt ist. Der Rahmen 2 weist frontseitig Verbindungsglieder 3 zur Verbindung mit einer Drei-Punkt-Aufhängung eines Schleppers auf, der die Fräse zieht und über eine nicht dargestellte Zapfwelle antreibt. Diese Zapfwelle wird in einen Zapfwellentrichter 4 gesteckt und treibt nicht dargestellte Zahnräder an, die an Achsen 5 abgestützt sind. Diese nicht dargestellten Zahnräder verbinden zwei Fräser 6 mit der nicht dargestellten Zapfwelle drehmomentübertragend.

Die Fräser 6 sind an jeweils einer Antriebswelle 7 drehbar abgestützt, die mit jeweils einem Zahnrad 8 drehfest verbunden ist. Die beiden Fräser 6 sind grundsätzlich baugleich ausgebildet. Sie weisen im Wesentlichen radial ausgerichtete Schlegel 9 auf, die bei der Rotation des Fräsers 6 nicht dargestelltes Bodenmaterial mitnehmen und in Rotation versetzen. Die beiden Fräser 6 sind dabei gegenläufig zueinander angetrieben, wobei der zu bildende Damm zwischen den beiden Fräsern 6 entsteht.

Die Fräser 6 sind in einem gemeinsamen Gehäuse 10 untergebracht, welches unterseitig und dammseitig offen ausgebildet ist. Alle übrigen Seiten des Gehäuses 10 sind geschlossen. Dieses Gehäuse 10 weist außenseitige, dem Damm abgewandte Gehäusewände 11 auf, welche nur geringfügig von den Schlegeln 9 der Fräser 6 beabstandet sind. Diese Gehäusewände 11 sind im Wesentlichen zylindrisch gekrümmt, um eine gute Anpassung an die rotierenden Fräser 6 zu gewährleisten. Das von den Schlegeln 9 der Fräser 6 mitgenommene Bodenmaterial wird entlang der Gehäusewand 11 geführt und Richtung Damm transportiert. Im mittleren Bereich weist das Gehäuse 10 eine Prallplatte 12 auf, welche die im Bodenmaterial von den Fräsern 6 eingebrachte kinetische Energie vernichtet, so dass das Bodenmaterial im mittleren Bereich schwerkraftbedingt nach unten fällt. Damit häuft sich in diesem mittleren Bereich der zu bildende Damm an. Zur groben Festlegung des Dammquerschnitts weist das Gehäuse 10 außerdem Dammvorformer 13 auf, die den zu bildenden Damm zu einem trapezförmigen Querschnitt formen.

Dem Gehäuse 10 ist heckseitig ein Dammformer 14 nachgeordnet, der von zwei seitlichen Formplatten 15 und einer oberen Formplatte 16 gebildet ist. Sowohl die seitlichen Formplatten 15 als auch die obere Formplatte 16 sind schwenkbar gelagert und über entsprechende Einstellmittel 17 in ihrer Winkellage einstellbar und fixierbar.

Im Heckbereich ist der Rahmen 2 an zwei Rädern 18 abgestützt, um einerseits die Drei-Punkt-Aufhängung des Schleppers zu entlasten und andererseits zu erreichen, dass die Fräse 1 möglichst genau dem vorhandenen Bodenprofil folgt. Sowohl frontseitig als auch heckseitig sind am Rahmen 2 Bodenlockerer 19 verschwenkbar gehalten.

Die Fräser 6 werden anhand der Detaildarstellung gemäß Figur 2 näher beschrieben. Die Schlegel 9 sind an Scheiben 20 mittels Keilen 21 befestigt. Diese Keile 21 sorgen dafür, dass eine Prallfläche 22 spitzwinkelig zu einer Bewegungsrichtung 23 des Schlegels 9 ausgerichtet ist. Die Keile 21 sind dabei lösbar mittels Schrauben an der Scheibe 20 montiert, so dass diese Keile 21 auch durch solche mit anderem Keilwinkel ersetzbar sind.

Die Figur 2 zeigt außerdem einen über seine Länge verdrehten Schlegel 9, der aus einem quaderförmigen Schlegel mittels Torsionsverformung entstanden ist. Dieser verformte Schlegel besitzt einen Anstellwinkel zur Bewegungsrichtung 23, der radial nach außen zunimmt, um der radial nach außen zunehmenden Geschwindigkeit des Schlegels 9 Rechnung zu tragen. Es können auch keine, mehrere bzw. alle Schlegel verdreht ausgebildet sein.

### Bezugszeichenliste

- 1: Fräse
- 2: Rahmen
- 3: Verbindungsglied
- 4: Zapfwellentrichter
- 5: Achse
- 6: Fräser
- 7: Antriebswelle
- 8: Zahnrad
- 9: Schlegel
- 10: Gehäuse
- 11: Gehäusewand
- 12: Prallplatte
- 13: Dammvorformer
- 14: Dammformer
- 15: seitliche Formplatte
- 16: obere Formplatte
- 17: Einstellmittel
- 18: Rad
- 19: Bodenlockerer
- 20: Scheibe
- 21: Keil
- 22: Prallfläche
- 23: Bewegungsrichtung

## Patentansprüche

1. Landwirtschaftliche Fräse zur Bearbeitung eines Dammes, insbesondere eines Spargeldammes, wobei die Fräse (1) mindestens einen um eine Antriebswelle (7) rotierenden Fräser (6) aufweist, der Bodenmaterial zum Damm aufwerfen kann, und der mindestens einen Fräser (6) und mindestens einen Schlegel (9) aufweist, der mit dem mindestens einen Fräser (6) rotiert und der mindestens eine Prallfläche (22) zur Erfassung des Bodenmaterials besitzt, **dadurch gekennzeichnet, dass** die Prallfläche (22) spitzwinkelig zur Drehrichtung angestellt ist.

2. Landwirtschaftliche Fräse nach Anspruch 1, **dadurch gekennzeichnet, dass** die mindestens eine Prallfläche (22) mit der Drehrichtung einen Winkel zwischen 10° und 80° einschließt.

3. Landwirtschaftliche Fräse nach Anspruch 2, **dadurch gekennzeichnet, dass** die mindestens eine Prallfläche (22) mit der Drehrichtung einen Winkel zwischen 20° und 70° einschließt.

4. Landwirtschaftliche Fräse nach Anspruch 3, **dadurch gekennzeichnet, dass** die mindestens eine Prallfläche (22) mit der Drehrichtung einen Winkel zwischen 25° und 65° einschließt.

5. Landwirtschaftliche Fräse nach mindestens einem der Ansprüche 1 bis 4, **dadurch gekennzeichnet, dass** der mindestens eine Schlegel (9) über mindestens einen Keil (21) mit dem mindestens einen Fräser (6) verbunden ist.

6. Landwirtschaftliche Fräse nach Anspruch 5, **dadurch gekennzeichnet, dass** mehrere der Keile (21) zur Verfügung gestellt werden, die unterschiedliche Keilwinkel aufweisen, und der mindestens eine Keil (21) austauschbar ist.

7. Landwirtschaftliche Fräse nach mindestens einem der Ansprüche 1 bis 6, **dadurch gekennzeichnet, dass** der mindestens eine Schlegel (9) über seine Länge verdreht ist, so dass der Winkel zwischen der mindestens einen Prallfläche (22) und der Drehrichtung in radialer Richtung nach außen zunimmt.
